# EUROPEAN PATENT SPECIFICATION

(11) **EP 3 902 239 B1**
(45) Date of publication and mention of the grant of the patent: **29.10.2025**
(21) Application number: 19900957.2
(22) Date of filing: 16.12.2019
(51) Int. Cl.: H04N 23/617, H04N 23/661, H04N 23/63, G06F 9/54, G06F 16/176, H04N 7/14, H04M 1/724

(54) **CAMERA SHARING METHOD AND APPARATUS**
VERFAHREN UND VORRICHTUNG ZUR GEMEINSAMEN NUTZUNG VON KAMERAS
PROCÉDÉ ET APPAREIL DE PARTAGE DE CAMÉRA

(30) Priority: 17.12.2018 CN 201811543983
(43) Date of publication of application: 27.10.2021
(73) Proprietor: ZTE Corporation, Shenzhen, Guangdong 518057 (CN)
(72) Inventor: CHEN, Feixiong, Shenzhen, Guangdong 518057 (CN)
(74) Representative: Canzler & Bergmeier Patentanwälte Partnerschaft mbB
(86) International application number: PCT/CN2019/125547
(87) International publication number: WO 2020/125572

(56) References cited:
- CN-A- 101 594 510
- CN-A- 101 833 520
- CN-A- 103 516 994
- CN-A- 104 918 112
- CN-A- 105 450 986
- CN-A- 107 527 317
- CN-A- 107 659 768
- CN-A- 108 304 247
- US-A1- 2006 050 155
- US-A1- 2008 170 133
- US-A1- 2017 235 614
- JENSJJ: "FFMPEG video0 (webcam) -> video2 (loopback) video3 (loopback)", 30 November 2017 (2017-11-30), XP055947083, Retrieved from the Internet <URL:https://github.com/umlaeute/v4l2loopback/issues/151> [retrieved on 20220728]
- DE JONG TIM: "Use webcam in two applications under Linux simultaneously using v4l2loopback", 20 August 2013 (2013-08-20), XP055947081, Retrieved from the Internet <URL:https://www.timdejong.nl/blog/use-webcam-two-applications-under-linux-simultaneously-using-v4l2loopback> [retrieved on 20220728]
- WANG DENGYOU ET AL: "Research and implementation of laser shooting system based on Linux", 2017 12TH INTERNATIONAL CONFERENCE ON COMPUTER SCIENCE AND EDUCATION (ICCSE), IEEE, 22 August 2017 (2017-08-22), pages 496 - 501, XP033240849, DOI: 10.1109/ICCSE.2017.8085542
- KOH MINGHAO ET AL: "Performance Analysis and Optimization of User Space versus Kernel Space Network Application", RESEARCH AND DEVELOPMENT, 2007. SCORED 2007. 5TH STUDENT CONFERENCE ON, IEEE, PISCATAWAY, NJ, USA, 12 December 2007 (2007-12-12), pages 1 - 6, XP031230352, ISBN: 978-1-4244-1469-7

## Description

### TECHNICAL FIELD

The present disclosure relates to (but is not limited to) the field of communications.

### BACKGROUND

Identity verification or payment can be realized by many applications through scanning QR codes. However, the identity verification or payment can be realized only through scanning local QR codes, rather than a remote code sharing. In practice, it is often needed to carry out payment or verification through remotely scanning QR codes in real time.

Current camera sharing techniques are mainly used between a webcam and a user terminal. The webcam has a public IP, and a mobile operating system of the user terminal (e.g. Android and IPhone) can provide a general Application Programming Interface (API) to acquire data from a remote camera, thereby realizing camera sharing. However, in a case of the cameras of two mobile phones, since there is no public IP, the cameras cannot be shared with each other through general API.

In a document "FFMPEG video0 (webcam) - > video2 (loopback) video3 (loopback)", 30 November 2017, XP055947083, retrieved from the Internet: URL: https://github.com/umlaeute/v412loopback/issues/151, it tries to stream the viedo0 (webcam USB) to 2x virtual loopback video2 and video 3 using FFMPEG, and tries to access video 2 or video 3 using OpenCV while streaming and it is not receiving any video data.

In a document "Use webcam in two applications under Linux simultaneously using v412loopback", 20 August 2013, XP055947801, retrieved from the Internet: URL: https://www.timdejong.nl/blog/use-webcam-two-applications-under-linux-simultaneous ly-using-v412loopback, it wants to be able to access the webcam trough Adobe Flash but at the same time record the stream as will with VLC, to do this, it had to split the video from /dev/video0 to two virtual webcam devices, and uses the v412loopback and ffmpeg to achieve this, what it does is use the input of /dev/video and copy the stream to /dev/video1 and /dev/video2.

A US patent application, whose publication number is US2017/0235614A1, discloses a technology related to virtualizing sensors. In one example of the disclosed technology, a method can be used to allocate resources of a computing system. The method can include enumerating hardware sensors and software modules that are capable of interacting with one another. A topology can be negotiated that is compatible with capabilities of the enumerated hardware sensors and software modules. A first request can be received from a first requestor to configure at least one of the enumerated hardware sensors and software modules. The at least one of the enumerated hardware sensors and software modules can be configured in response to the received first request.

A US patent application, whose publication number is US2006/0050155A1, discloses systems, methods, and software sharing an output of a video capture device, such as a video camera, amongst more than one application. Some embodiments comprise writing video frames to a shared memory buffer that is accessible by one or more applications. Some applications are virtual device drivers that appear as actual device drivers of the video capture device producing the video data. Some embodiments comprise acquiring exclusive control of a video capture device driver, allocating a shared memory buffer, receiving a video frame from the video capture device driver, and writing the video frame to the shared memory buffer. In some embodiments, the shared memory buffer comprises two shared memory buffers that are written to and read from in an alternating fashion.

A Chinese patent application, whose publication number is CN104918112A, discloses a camera resource application method, which comprises the following steps: when an application request of a first application is received, the number of applications using the camera resources currently is acquired according to the application request; when the application number is at least one, prebuilt first virtual camera resources are distributed to the first application for use; according to the first application, second virtual camera resources are built; and when the application request of the second application is received during a process during which the first application uses the first virtual camera resources, the second virtual camera resources are distributed to the second application for use. The invention also discloses a camera resource application device. The operation process of the camera in the case of multiple applications can be simplified, and the multiple applications can use the camera resources at the same time.

A Chinese patent application, whose publication number is CN107527317A, discloses an image processing-based data transmission system. The system includes a hardware layer device, a kernel layer device and an application layer device; the hardware layer device is used for preprocessing images shot by a camera to obtain image data and caching the image data to a first cache device; the kernel layer device is used for extracting the image data and hierarchically storing the image data to a plurality of second cache devices; and the application layer device is used for extracting the image data from the second cache devices and realizing the transmission of the image data. With the image processing-based data transmission system provided by the embodiments of the present invention adopted, the transmission efficiency of the image data in a memory is obviously improved, and requirements for the timely processing of large-scale image data are satisfied.

A Chinese patent application, whose publication number is CN103516994A, discloses a multi-screen adapter camera configuration method. The method includes the step that connection is built between a mobile terminal and a multi-screen adapter; the multi-screen adapter sends a photographing requiring command to the mobile terminal; the mobile terminal receives the command and sends data of an image shot by a camera to the multi-screen adapter; the multi-screen adapter receives the data of the image and converts the image data into image data capable of being displayed on a display device. The invention further discloses the multi-screen adapter and a multi-screen interaction system. Connection is built between the mobile terminal and the multi-screen adapter, so when application programs need to use the camera, the multi-screen adapter can photograph through the camera of the mobile terminal, the obtained image data can be sent to the multi-screen adapter, and therefore the multi-screen adapter can use applications on mobile phones, tablet computers and other mobile terminals and based on the camera and the image data can be displayed on the display device. According to the method, the multi-screen adapter and the multi-screen interaction system, portability is good, modification of the system is little, efficiency is high and user experience is improved.

### SUMMARY

The invention is set out in the appended set of claims.

### BRIEF DESCRIPTION OF THE DRAWINGS

The drawings described here are intended to provide a further understanding of the present disclosure and constitutes a part of the present application. The exemplary embodiments of the present disclosure and the description thereof are intended to explain the present disclosure, but do not constitute improper limitation to the present disclosure. In the drawings:
Fig. 1 is a schematic structural diagram of a terminal according to the present disclosure;
Fig. 2 is a flowchart illustrating a camera sharing method according to the present disclosure;
Fig. 3 is a flowchart illustrating camera data transmission according to the present disclosure;
Fig. 4 is schematic diagram of user actions according to the present disclosure;
Fig. 5 is a schematic diagram illustrating data transmission between a pair of virtual cameras according to the present disclosure;
Fig. 6 is a flowchart illustrating a camera sharing method according to the present disclosure;
Fig. 7 is a schematic diagram illustrating display by shared cameras according to the present disclosure;
Fig. 8 is another flowchart illustrating a camera sharing method according to the present disclosure;
Fig. 9 is a schematic diagram of modules of a camera sharing apparatus according to the present disclosure; and
Fig. 10 is another schematic diagram of modules of a camera sharing apparatus according to the present disclosure.

### DETAILED DESCRIPTION

The present disclosure will be described in detail below with reference to the drawings and embodiments. It should be noted that the embodiments of the present disclosure and the features therein may be combined with each other if no conflict is incurred.

It should be noted that the terms "first", "second" and the like in description, claims, and drawings of the present disclosure are used for distinguishing between similar objects, but not necessarily for describing a particular order or chronological order.

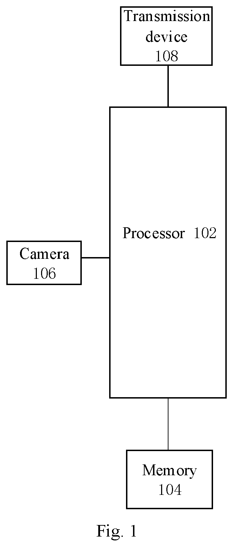

The method embodiments provided by the present disclosure can be implemented in a mobile terminal, a computer terminal or a similar electronic device equipped with a camera. For example, the method embodiments are implemented in a mobile terminal, and Fig. 1 is a block diagram illustrating a hardware structure of a mobile terminal in which a camera sharing method is performed according to the present disclosure. As shown in Fig. 1, a mobile terminal 100 may include one or more processors 102 (only one processor is shown), which may include, but is not limited to, a processing device such as a microprocessor (e.g. a microcontroller unit (MCU)) or a programmable logic device (e.g. a field programmable gate array (FPGA)), a memory 104 for storing data, a camera 106, and a transmission device 108 for communication functions. A virtual camera driver is installed in the mobile terminal, and a pair of virtual cameras (i.e., a first virtual camera and a second virtual camera) is created. It should be understood by those of ordinary skill in the art that the structure shown in Fig. 1 is only for illustration and is not intended to limit the structure of the mobile terminal. For example, the mobile terminal 100 may include more or fewer components than those shown in Fig. 1, or may be configured in a way different from that shown in Fig. 1.

The memory 104 may be configured to store a computer program, such as a software program and a module of application software, e.g. a computer program corresponding to the camera sharing method of the present disclosure. By running the computer program stored in the memory 104, the processor 102 executes various functional applications and data processing to implement the camera sharing method of the present disclosure. The memory 104 may include a volatile memory such as a high-speed random access memory, and may also include a non-volatile memory, such as one or more magnetic storage devices, flash memories, or other non-volatile solid-state memories. In some examples, the memory 104 may further include a memory remotely arranged relative to the processor 102, and the remote memory may be connected to the mobile terminal 100 via a network. Examples of the network include, but are not limited to, the Internet, an intranet, a local area network, a mobile communication network, and the combinations thereof.

The camera 106 is configured to shoot, for example, shooting data is transmitted to a peer device by the transmission device 108 through a video call.

The transmission device 108 is configured to receive or transmit data via a network. Specific examples of the network may include a wireless network provided by a communication provider of the mobile terminal 100. In one example, the transmission device 108 may include a Network Interface Controller (NIC), which can be connected to other network devices via a base station so as to communicate with the Internet. In another example, the transmission device 108 may include a Radio Frequency (RF) module, which is configured to communicate with the Internet in a wireless manner.

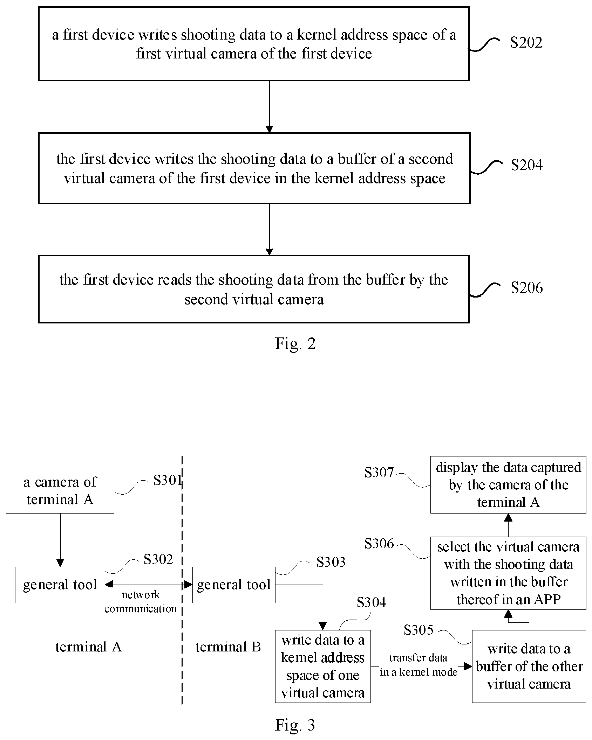

A camera sharing method performed in the mobile terminal is provided by the present disclosure, and Fig. 2 is a flowchart illustrating the camera sharing method according to the present disclosure. For convenience of description, a local mobile terminal is referred to as a first device and a remote mobile terminal is referred to as a second device. As shown in Fig. 2, the method includes the following steps S202 to S206.

In step S202, the first device writes shooting data to a kernel address space of a first virtual camera of the first device.

In step S204, the first device writes the shooting data to a buffer of a second virtual camera of the first device in the kernel address space.

In step S206, the first device reads the shooting data from the buffer by the second virtual camera.

In the above method, the shooting data is converted to kernel-mode shooting data of one virtual camera of the first device, and then are read by the other virtual camera to be used by existing applications, thereby realizing camera sharing.

In the above method, the shooting data may be real-time shooting data from a camera of the second device, and the first device can communicate with the second device through wired or wireless network connection to acquire the real-time shooting data from the second device. Alternatively, the shooting data may be the data already captured by the camera of the first device.

In the above method, if the shooting data is the real-time shooting data from the camera of the second device, the first device needs to establish network connection with the second device and acquire the real-time shooting data through the network connection before the step S202 is performed. If the shooting data is the data already captured by the camera of the first device, the first device just needs to acquire the already captured data.

According to the present disclosure, before the step S202, the camera sharing method further includes starting an application in the first device, and switching the camera to the second virtual camera for the application.

The first virtual camera and the second virtual camera may be created in the first device in advance, and each virtual camera includes its own read/write interface and buffer.

According to the present disclosure, there is no need to redevelop the application (APP) in the terminal, and the data captured by the cameras of two connected terminals can be shared based on existing APP. A pair of virtual cameras can be added to the terminal, and each APP involving shooting has a camera traversal function, for example, the APP can select one of a front camera, a rear camera and a virtual camera. By converting socket data of a remote camera to kernel-mode data of a local virtual camera and reading the data by the other virtual camera for being used by an APP, camera sharing is realized. When camera sharing is realized in such way, the shooting data of the camera is irrelevant to specific APP.

A process of performing the sharing camera method between two terminals is provided according to the present disclosure. As shown in Fig. 3, the process includes the following steps S301 to S307.

In step S301, a camera of terminal A shoots to generate shooting data.

In step S302, the terminal A sends the shooting data to terminal B through a communication tool which may be a general communication tool.

In step S303, the terminal B acquires the data from the remote camera through the general communication tool under a condition that security authentication is ensured.

In step S304, the terminal B writes the shooting data acquired from the terminal A to a kernel address space of one virtual camera of the terminal B.

In step S305, the shooting data is transferred in the kernel address space, that is, the shooting data is directly written to a buffer of the other virtual camera just after the shooting data is received by the kernel address space, so as to ensure that the other virtual camera prepares the data for real-time reading.

In step S306, a corresponding APP is opened in the terminal B, and the camera is switched to the virtual camera having the shooting data written in the buffer thereof. If the APP has a camera switching function, the virtual camera may be selected through traversal.

In step S307, the virtual camera reads the camera data from the buffer. At this time, the APP in the terminal B can display the data captured by the camera of the terminal A at any time.

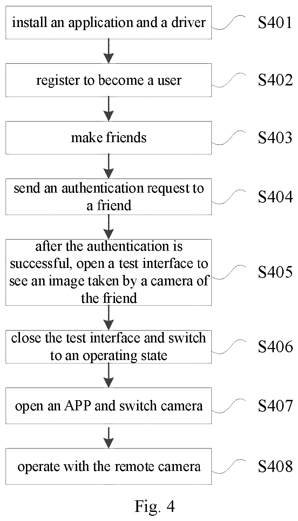

An example of camera sharing from the perspective of users is given below. In the example, a general communication tool and a virtual camera driver are required to be installed in used terminals. As shown in Fig. 4, the specific process includes the following steps S401 to S408.

In step S401, downloading an application having a virtual camera driver from an official website and installing the application.

In step S402, registering with the official website to become an official user.

In step S403, making friends with other registered users.

In step S404, sending an authentication request for screen sharing to a friend.

In step S405, after the authentication is successful, opening a camera test interface. At this time, if an image taken by a camera of a terminal of the friend can be seen through the interface, it is indicated that socket communication is normal.

In step S406, closing the test interface, and switching to an operating state, in which data captured by a camera is sent to a kernel buffer of a virtual camera driver.

In step S407, selecting an APP involving shooting of a local terminal, and switching to a virtual camera for the APP.

In step S408, displaying images taken by the camera of the terminal of the friend by the APP, thereby realizing universal sharing of a remote camera.

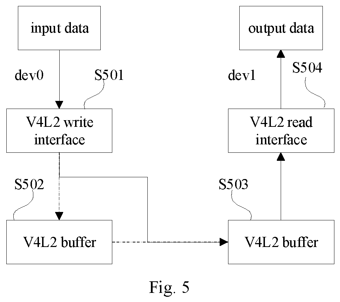

The transmission of shooting data between two virtual cameras will be described in detail below. A virtual camera driver can create two virtual camera devices at the same time, e.g. dev0 and dev1, and each virtual camera device is provided with its own read/write interface and buffer. Bidirectional data transmission is not needed between the two virtual camera devices. For simplifying the description, dev0 can be regarded as a data input device, and dev1 be a data output device. As shown in Fig. 5, the transmission of shooting data of a camera includes the following steps S501 to S504.

In step S501, received shooting data is sent to a kernel address space of dev0 through V4L2 write interface.

In step S502, dev0 does not directly store the data.

In step S503, when received by the kernel address space, the shooting data from dev0 is directly written to V4L2 buffer of dev1.

In step S504, the shooting data in the buffer of dev1 is read through a read interface of dev1.

In the above process, a fixed-size space may be applied for the buffer; and head and tail indicators may be defined, and the head indicator and the tail indicator are changed simultaneously in read and write operations.

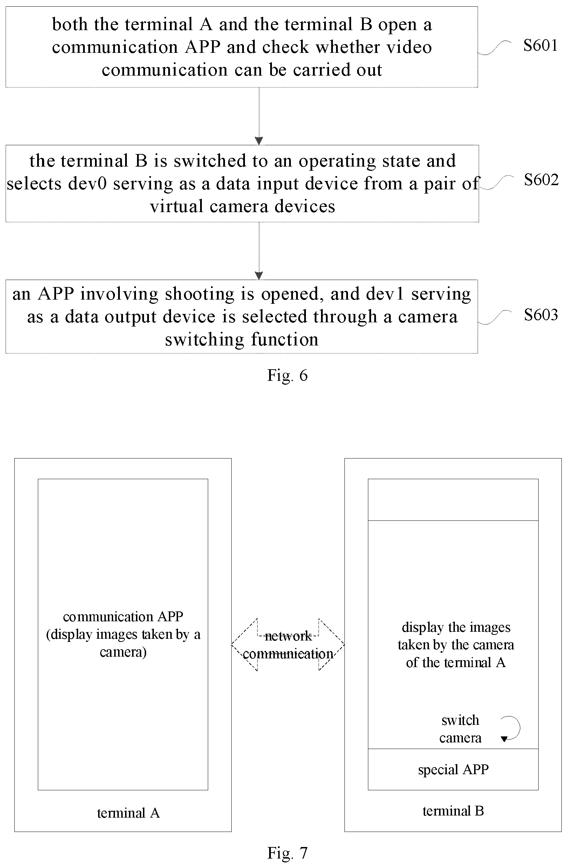

The technical solution to camera sharing provided by the present disclosure will be described in detail below from the perspective of user interfaces. When the terminal A and the terminal B carry out video communication, a camera of the terminal A is shared to the terminal B. As shown in Fig. 6, the specific process may include the following steps S601 to S603.

In step S601, both the terminal A and the terminal B open communication APP and check whether video communication can be carried out.

In step S602, the terminal B is switched to an operating state and selects dev0 serving as a data input device from a pair of virtual camera devices, so that images taken by the camera of the terminal A can be written to a kernel address space of the virtual camera dev0.

In step S603, an APP involving shooting is opened, and dev1 serving as a data output device is selected through a camera switching function, so that the images taken by the camera of the terminal A can be seen, as shown in Fig. 7.

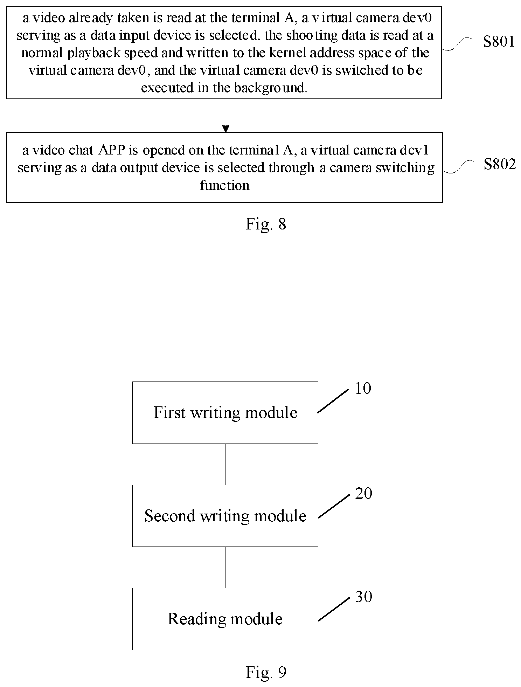

The present disclosure further provides a camera sharing method. In the method, instead of carrying out real-time video communication between the two terminals, the terminal A outputs already captured shooting data through a virtual camera. As shown in Fig. 8, the process includes the following steps S801 and S802.

In step S801, a video already taken is read at the terminal A, a virtual camera dev0 serving as a data input device is selected, the shooting data is read at a normal playback speed and written to the kernel address space of the virtual camera dev0, and the virtual camera dev0 is switched to be executed in the background.

In step S802, a video chat APP is opened on the terminal A, a virtual camera dev1 serving as a data output device is selected through a camera switching function, and the already taken video, which are prepared by the terminal A for display before the video chat, can be displayed on the terminal B when video chat communication is established, thereby realizing a fake chat.

Through the above description of the embodiments, those of ordinary skill in the art can understand clearly that the method according to the above embodiments may be implemented by software together with a necessary general-purpose hardware platform, and may also be implemented by hardware. Based on such understanding, the technical solutions of the present disclosure may be implemented in the form of a software product, which is stored in a storage medium (such as a Read-Only Memory (ROM)/Random Access Memory (RAM), a magnetic disk and an optical disc) and includes several instructions to enable a terminal device (which may be a mobile phone, a computer, a server or a network device) to execute the camera sharing method described in each embodiment of the present disclosure.

The present disclosure further provides a camera sharing apparatus configured to implement the camera sharing method according to the present disclosure, and what is illustrated above is not repeated here. The term "module" used below refers to software, hardware, or a combination of software and hardware that can perform predetermined functions. Although the apparatus described in the following embodiment may be implemented by software, the implementations of the apparatus by hardware or a combination of software and hardware are possible and can be conceived.

Fig. 9 is a schematic structural diagram of a camera sharing apparatus according to the present disclosure, and the camera sharing apparatus is located in a first device. As shown in Fig. 9, the apparatus includes a first writing module 10, a second writing module 20 and a reading module 30.

The first writing module 10 is configured to write shooting data to a kernel address space of a first virtual camera of the first device.

The second writing module 20 is configured to write the shooting data to a buffer of a second virtual camera of the first device in the kernel address space.

The reading module 30 is configured to read the shooting data from the buffer by the second virtual camera.

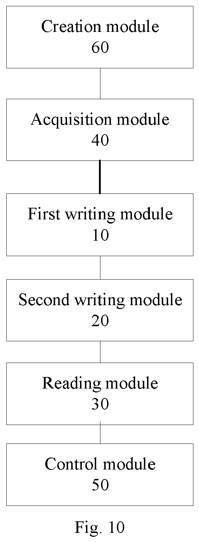

Fig. 10 is another schematic structural diagram of a camera sharing apparatus according to the present disclosure. As shown in Fig. 10, in addition to all the modules shown in Fig. 9, the apparatus further includes an acquisition module 40, a control module 50 and a creation module 60.

The shooting data may be real-time shooting data from a camera of a second device, and a first device can communicate with the second device through wired or wireless network connection to acquire the real-time shooting data from the second device. Alternatively, the shooting data may be the data already captured by the camera of the first device.

If the shooting data is the real-time shooting data from the camera of the second device, the network connection with the second device can be established through the acquisition module 40, and the real-time shooting data can be acquired from the second device through the network connection.

If the shooting data is the data already captured by the camera of the first device, the already captured shooting data can be directly acquired by the acquisition module 40 from the first device.

The control module 50 is configured to start an application in the first device, and switch the camera to the second virtual camera for the application.

The first virtual camera and the second virtual camera may be created with the creation module 60 in the first device in advance, with each virtual camera including its own read/write interface and buffer.

It should be noted that the above modules may be implemented by software or hardware. When by hardware, the modules may be implemented in the following ways: all the modules are located in a same processor, or the modules are randomly combined and located in different processors.

The present disclosure further provides a storage medium having a computer program stored therein. When the computer program is executed by a processor, the processor performs the camera sharing method according to the present disclosure.

The present disclosure further provides an electronic device, including a memory having a computer program stored therein, and a processor configured to run the computer program to perform the camera sharing method according to the present disclosure.

Apparently, it should be understood by those of ordinary skill in the art that all the modules or steps described above may be implemented by a general-purpose computing device, may be integrated in a single computing device or distributed on a network composed of a plurality of computing devices. Optionally, the modules or steps may be implemented by program codes executable by a computing device, such that the modules or steps can be stored in a storage device and executed by a computing device. In some cases, the steps illustrated or described may be performed in an order different from that described herein. The modules or steps may be separately made into integrated circuit modules, or some of the modules or steps may be made into a single integrated circuit module. Thus, the present disclosure is not limited to any specific combination of hardware and software.

The description above is merely of the embodiments of the present disclosure, but is not intended to limit the present disclosure. Various modifications and changes may be made to the present disclosure by those of ordinary skill in the art without departing from the scope of the present disclosure as set forth in the appended claims.

## Claims

1. A camera sharing method, **characterized by**:
writing (S202), by a first mobile terminal, shooting data received from a second mobile terminal to a kernel address space of a first virtual camera of the first mobile terminal;
transferring, by the first mobile terminal, the shooting data in the kernel address space by directly writing (S204), by the first mobile terminal, the shooting data to a buffer of a second virtual camera of the first mobile terminal just after the shooting data is received by the kernel address space; and
reading (S206), by an application in the first mobile terminal, the shooting data from the buffer through the second virtual camera.

2. The method of claim 1, wherein the shooting data comprises:
data captured in real time by a camera of the second mobile terminal in communication connection with the first mobile terminal.

3. The method of claim 1 or 2, before the step of writing (S202), by the first mobile terminal, the shooting data received from the second mobile terminal to the kernel address space of the first virtual camera of the first mobile terminal, further comprising:
establishing, by the first mobile terminal, network connection with the second mobile terminal and acquiring data captured in real time by a camera of the second mobile terminal through the network connection.

4. The method of any one of claims 1 to 3, before the step of reading (S206), by the first mobile terminal, the shooting data from the buffer by the second virtual camera, further comprising:
starting the application in the first mobile terminal, and switching to the second virtual camera for the application.

5. The method of any one of claims 1 to 4, before the step of writing (S202), by the first mobile terminal, the shooting data received from the second mobile terminal to the kernel address space of the first virtual camera of the first mobile terminal, further comprising:
creating the first virtual camera and the second virtual camera in the first mobile terminal, wherein each of the first virtual camera and the second virtual camera comprises its own read/write interface and buffer.

6. A camera sharing apparatus located in a first mobile terminal, **characterized by**:
a first writing module (10) configured to write shooting data received from a second mobile terminal to a kernel address space of a first virtual camera of the first mobile terminal;
a second writing module (20) configured to transferring, by the first mobile terminal, the shooting data in the kernel address space by directly writing the shooting data to a buffer of a second virtual camera of the first mobile terminal just
after the shooting data is received by the kernel address space; and
a reading module (30) configured to read, by an application in the first mobile terminal, the shooting data from the buffer through the second virtual camera.

7. The camera sharing apparatus of claim 6, wherein the shooting data comprises:
data captured in real time by a camera of the second mobile terminal in communication connection with the first mobile terminal.

8. The camera sharing apparatus of claim 6, further comprising:
an acquisition module (40) configured to establish network connection with the second mobile terminal and acquire data captured in real time by a camera of the second mobile terminal through the network connection.

9. The camera sharing apparatus of claim 6, further comprising:
a control module (50) configured to start the application in the first mobile terminal, and switch to the second virtual camera for the application.

10. The camera sharing apparatus of claim 6, further comprising
a creation module (60) configured to create the first virtual camera and the second virtual camera in the first mobile terminal, wherein each of the first virtual camera and the second virtual camera comprises its own read/write interface and buffer.

11. A storage medium having a computer program stored therein, wherein when the computer program is executed by a processor, the processor performs the camera sharing method of any one of claims 1 to 5.

## Patentansprüche

1. Verfahren zum gemeinsamen Nutzen von Kameras, **gekennzeichnet durch**:
Schreiben (S202), durch ein erstes mobiles Endgerät, von Aufnahmedaten, die von einem zweiten mobilen Endgerät empfangen werden, in einen Kernel-Adressraum einer ersten virtuellen Kamera des ersten mobilen Endgeräts;
Übertragen, durch das erste mobile Endgerät, der Aufnahmedaten in dem Kernel-Adressraum durch direktes Schreiben (S204), durch das erste mobile Endgerät, der Aufnahmedaten in einen Puffer einer zweiten virtuellen Kamera des ersten mobilen Endgeräts, unmittelbar nachdem die Aufnahmedaten durch den Kernel-Adressraum empfangen werden; und
Lesen (S206), durch eine Anwendung in dem ersten mobilen Endgerät, der Aufnahmedaten aus dem Puffer durch die zweite virtuelle Kamera.

2. Verfahren nach Anspruch 1, wobei die Aufnahmedaten umfassen:
Daten, die in Echtzeit durch eine Kamera des zweiten mobilen Endgeräts in Kommunikationsverbindung mit dem ersten mobilen Endgerät erfasst werden.

3. Verfahren nach Anspruch 1 oder 2, vor dem Schritt des Schreibens (S202), durch das erste mobile Endgerät, der Aufnahmedaten, die von dem zweiten mobilen Endgerät empfangen werden, in den Kernel-Adressraum der ersten virtuellen Kamera des ersten mobilen Endgeräts, ferner umfassend:
Herstellen, durch das erste mobile Endgerät, einer Netzwerkverbindung mit dem zweiten mobilen Endgerät und Erfassen von Daten, die in Echtzeit durch eine Kamera des zweiten mobilen Endgeräts erfasst werden, durch die Netzwerkverbindung.

4. Verfahren nach einem der Ansprüche 1 bis 3, vor dem Schritt des Lesens (S206), durch das erste mobile Endgerät, der Aufnahmedaten aus dem Puffer durch die zweite virtuelle Kamera, ferner umfassend:
Starten der Anwendung in dem ersten mobilen Endgerät und Schalten zu der zweiten virtuellen Kamera für die Anwendung.

5. Verfahren nach einem der Ansprüche 1 bis 4, vor dem Schritt des Schreibens (S202), durch das erste mobile Endgerät, der Aufnahmedaten, die von dem zweiten mobilen Endgerät empfangen werden, in den Kernel-Adressraum der ersten virtuellen Kamera des ersten mobilen Endgeräts, ferner umfassend:
Erzeugen der ersten virtuellen Kamera und der zweiten virtuellen Kamera in dem ersten mobilen Endgerät, wobei jede der ersten virtuellen Kamera und der zweiten virtuellen Kamera ihre eigene Lese-/Schreib-Schnittstelle und ihren eigenen Puffer umfasst.

6. Vorrichtung zum gemeinsamen Nutzen von Kameras, die sich in einem ersten mobilen Endgerät befindet, **gekennzeichnet durch**:
ein erstes Schreibmodul (10), das konfiguriert ist, um Aufnahmedaten, die von einem zweiten mobilen Endgerät empfangen werden, in einen Kernel-Adressraum einer ersten virtuellen Kamera des ersten mobilen Endgeräts zu schreiben;
ein zweites Schreibmodul (20), das konfiguriert ist, um, durch das erste mobile Endgerät, die Aufnahmedaten in dem Kernel-Adressraum durch direktes Schreiben der Aufnahmedaten in einen Puffer einer zweiten virtuellen Kamera des ersten mobilen Endgeräts zu übertragen, unmittelbar nachdem die Aufnahmedaten durch den Kernel-Adressraum empfangen werden;
nachdem die Aufnahmedaten durch den Kernel-Adressraum empfangen werden; und
ein Lesemodul (30), das konfiguriert ist, um, durch eine Anwendung in dem ersten mobilen Endgerät, die Aufnahmedaten aus dem Puffer durch die zweite virtuelle Kamera zu lesen.

7. Vorrichtung zum gemeinsamen Nutzen von Kameras nach Anspruch 6, wobei die Aufnahmedaten umfassen:
Daten, die in Echtzeit durch eine Kamera des zweiten mobilen Endgeräts in Kommunikationsverbindung mit dem ersten mobilen Endgerät erfasst werden.

8. Vorrichtung zum gemeinsamen Nutzen von Kameras nach Anspruch 6, ferner umfassend:
ein Erfassungsmodul (40), das konfiguriert ist, um eine Netzwerkverbindung mit dem zweiten mobilen Endgerät herzustellen und Daten, die in Echtzeit durch eine Kamera des zweiten mobilen Endgeräts erfasst werden, durch die Netzwerkverbindung zu erfassen.

9. Vorrichtung zum gemeinsamen Nutzen von Kameras nach Anspruch 6, ferner umfassend:
ein Steuermodul (50), das konfiguriert ist, um die Anwendung in dem ersten mobilen Endgerät zu starten und zu der zweiten virtuellen Kamera für die Anwendung zu schalten.

10. Vorrichtung zum gemeinsamen Nutzen von Kameras nach Anspruch 6, ferner umfassend
ein Erzeugungsmodul (60), das konfiguriert ist, um die erste virtuelle Kamera und die zweite virtuelle Kamera in dem ersten mobilen Endgerät zu erzeugen, wobei jede der ersten virtuellen Kamera und der zweiten virtuellen Kamera ihre eigene Lese-/Schreib-Schnittstelle und ihren eigenen Puffer umfasst.

11. Speichermedium mit einem darin gespeicherten Computerprogramm, wobei, wenn das Computerprogramm von einem Prozessor ausgeführt wird, der Prozessor das Verfahren zum gemeinsamen Nutzen von Kameras nach einem der Ansprüche 1 bis 5 durchführt.

## Revendications

1. Procédé pour partager une caméra, **caractérisé par** les étapes consistant à :
écrire (S202), par un premier terminal mobile, des données de prise reçues d'un second terminal mobile dans un espace d'adresse de noyau d'une première caméra virtuelle du premier terminal mobile ;
transférer, par le premier terminal mobile, les données de prise dans l'espace d'adresse de noyau en écrivant directement (S204), par le premier terminal mobile, les données de prise dans un tampon d'une seconde caméra virtuelle du premier terminal mobile juste après que les données de prise ont été reçues par l'espace d'adresse de noyau ; et
lire (S206), par une application dans le premier terminal mobile, les données de prise dans le tampon par l'intermédiaire de la seconde caméra virtuelle.

2. Procédé selon la revendication 1, dans lequel les données de prise comprennent :
des données capturées en temps réel par une caméra du second terminal mobile en connexion de communication avec le premier terminal mobile.

3. Procédé selon la revendication 1 ou 2, avant l'étape consistant à écrire (S202), par le premier terminal mobile, les données de prise reçues du second terminal mobile dans l'espace d'adresse de noyau de la première caméra virtuelle du premier terminal mobile, comprenant en outre les étapes consistant à :
établir, par le premier terminal mobile, une connexion de réseau avec le second terminal mobile et acquérir des données capturées en temps réel par une caméra du second terminal mobile par l'intermédiaire de la connexion de réseau.

4. Procédé selon l'une quelconque des revendications 1 à 3, avant l'étape consistant à lire (S206), par le premier terminal mobile, les données de prise dans le tampon par la seconde caméra virtuelle, comprenant en outre les étapes consistant à :
démarrer l'application dans le premier terminal mobile, et commuter vers la seconde caméra virtuelle pour l'application.

5. Procédé selon l'une quelconque des revendications 1 à 4, avant l'étape consistant à écrire (S202), par le premier terminal mobile, les données de prise reçues du second terminal mobile dans l'espace d'adresse de noyau de la première caméra virtuelle du premier terminal mobile, comprenant en outre les étapes consistant à :
créer la première caméra virtuelle et la seconde caméra virtuelle dans le premier terminal mobile, dans lequel chacune de la première caméra virtuelle et de la seconde caméra virtuelle comprend sa propre interface de lecture/écriture et son propre tampon.

6. Appareil pour partager une caméra localisé dans un premier terminal mobile, **caractérisé par** :
un premier module d'écriture (10) configuré pour écrire des données de prise reçues d'un second terminal mobile dans un espace d'adresse de noyau d'une première caméra virtuelle du premier terminal mobile ;
un second module d'écriture (20) configuré pour transférer, par le premier terminal mobile, les données de prise dans l'espace d'adresse de noyau en écrivant directement les données de prise dans un tampon d'une seconde caméra virtuelle du premier terminal mobile juste après que les données de prise ont été reçues par l'espace d'adresse de noyau ; et
après que les données de prise ont été reçues par l'espace d'adresse de noyau ; et
un module de lecture (30) configuré pour lire, par une application dans le premier terminal mobile, les données de prise dans le tampon par l'intermédiaire de la seconde caméra virtuelle.

7. Appareil pour partager une caméra selon la revendication 6, dans lequel les données de prise comprennent :
des données capturées en temps réel par une caméra du second terminal mobile en connexion de communication avec le premier terminal mobile.

8. Appareil pour partager une caméra selon la revendication 6, comprenant en outre :
un module d'acquisition (40) configuré pour établir une connexion de réseau avec le second terminal mobile et acquérir des données capturées en temps réel par une caméra du second terminal mobile par l'intermédiaire de la connexion de réseau.

9. Appareil pour partager une caméra selon la revendication 6, comprenant en outre :
un module de contrôle (50) configuré pour démarrer l'application dans le premier terminal mobile, et commuter vers la seconde caméra virtuelle pour l'application.

10. Appareil pour partager une caméra selon la revendication 6, comprenant en outre
un module de création (60) configuré pour créer la première caméra virtuelle et la seconde caméra virtuelle dans le premier terminal mobile, dans lequel chacune de la première caméra virtuelle et de la seconde caméra virtuelle comprend sa propre interface de lecture/écriture et son propre tampon.

11. Moyen de stockage sur lequel est stocké un programme informatique, dans lequel, lorsque le programme informatique est exécuté par un processeur, le processeur réalise le procédé pour partager une caméra selon l'une quelconque des revendications 1 à 5.
